(19) Europäisches Patentamt
European Patent Office
Office européen des brevets

(11) **EP 3 104 604 A1**

(12) **EUROPEAN PATENT APPLICATION**

(43) Date of publication:
**14.12.2016  Bulletin 2016/50**

(51) Int Cl.:
*H04N 13/02* (2006.01)     *H04N 5/335* (2006.01)

(21) Application number: **15305869.8**

(22) Date of filing: **08.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **DRAZIC, Valter**
**35576 CESSON-SÉVIGNÉ (FR)**
• **BOREL, Thierry**
**35576 CESSON-SÉVIGNÉ (FR)**
• **SEIFI, Mozhdeh**
**35576 CESSON-SÉVIGNÉ (FR)**

(74) Representative: **Browaeys, Jean-Philippe**
**TECHNICOLOR**
**1-5, rue Jeanne d'Arc**
**92130 Issy-les-Moulineaux (FR)**

(54) **LIGHT FIELD IMAGING DEVICE**

(57)     A light field imaging device comprising a micro-lens array (10) placed between a main lens and a photo-sensor, said micro-lens array comprising a plurality of micro-lenses ($15_{1,1}$, $15_{1,2}$, $15_{1,3}$, $15_{2,1}$, $15_{2,2}$, $15_{2,3}$) arranged in an image plane of the main lens, each micro-lens being configured to project a micro-image onto the photo-sensor, the photo-sensor comprising an ordered array of pixels having a predetermined colour pattern and distributed in an image plane of the micro-lens array. The plurality of micro-lenses ($15_{1,1}$, $15_{1,2}$, $15_{1,3}$, $15_{2,1}$, $15_{2,2}$, $15_{2,3}$) is arranged such that centres of the micro-images projected onto the photosensor by adjacent micro-lenses are separated by an inter-micro-image distance equal to an odd number of pixels.

**Figure 4**

**Description**

**1. TECHNICAL FIELD**

The present disclosure relates to light-field imaging. More particularly, the disclosure pertains to technologies for acquiring and processing light-field data.
More specifically, the present disclosure relates to plenoptic imaging device design.

**2. BACKGROUND**

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.
Conventional image capture devices render a three-dimensional scene onto a two-dimensional sensor. During operation, a conventional capture device captures a two-dimensional (2-D) image representing an amount of light that reaches each point on a photosensor within the device. However, this 2-D image contains no information about the directional distribution of the light rays that reach the photosensor (may be referred to as the light-field). Depth, for example, is lost during the acquisition. Thus, a conventional capture device does not store most of the information about the light distribution from the scene.
Light-field capture devices (also referred to as "light-field data acquisition devices") have been designed to measure a four-dimensional (4D) light-field of the scene by capturing the light from different viewpoints of that scene. Thus, by measuring the amount of light traveling along each ray of light that intersects the photosensor, these devices can capture additional optical information (information about the directional distribution of the bundle of light rays) for providing new imaging applications by post-processing. The information acquired/obtained by a light-field capture device is referred to as the light-field data. Light-field capture devices are defined herein as any devices that are capable of capturing light-field data.
Light-field data processing comprises notably, but is not limited to, generating refocused images of a scene, generating perspective views of a scene, generating depth maps of a scene, generating extended depth of filed (EDOF) images, generating stereoscopic images, and/or any combination of these.
There are several types of light-field capture devices, among which:

- plenoptic devices (or plenoptic cameras), which use a microlens array placed between the photo-sensor and the main lens, as described for example in document US 2013/0222633;
- a camera array, where all cameras image onto a single shared image sensor or different image sensors.

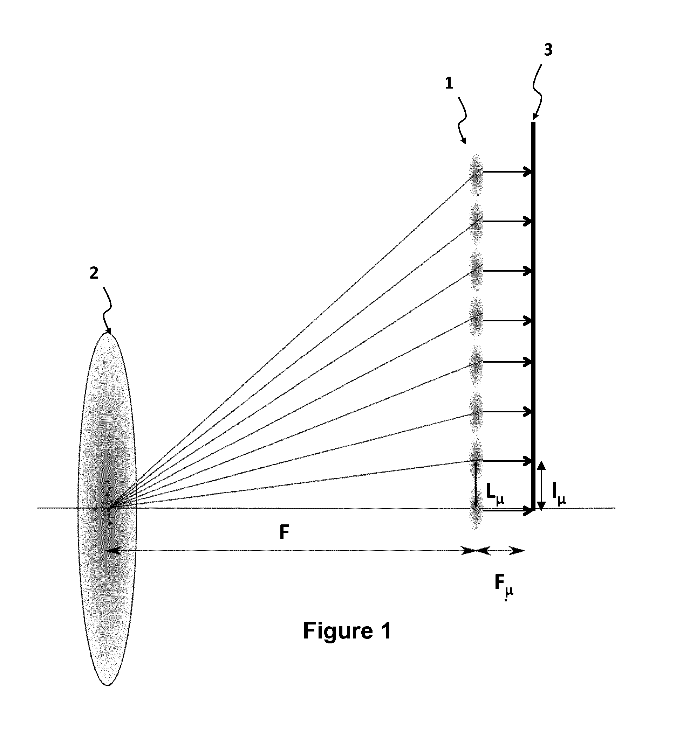

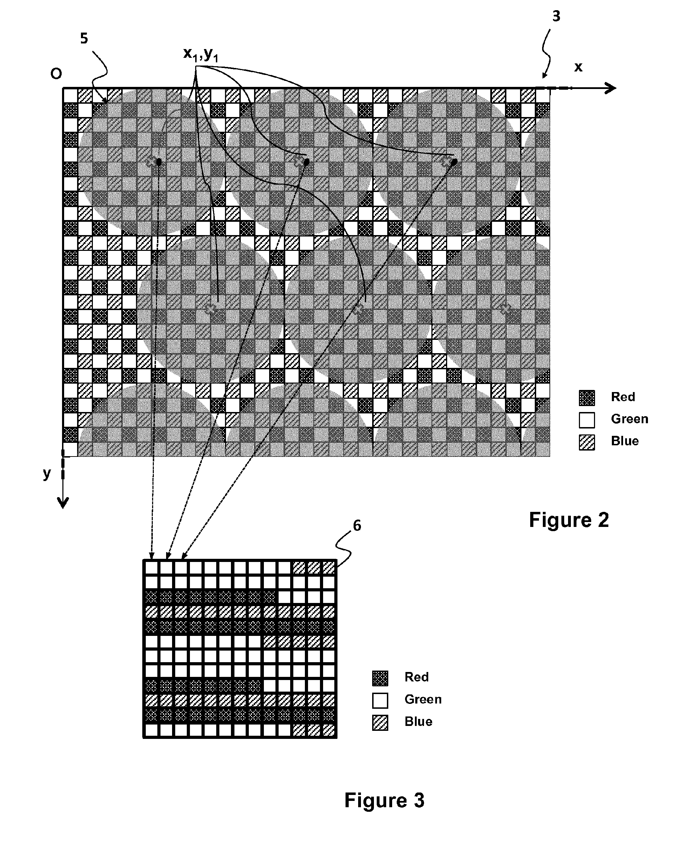

The present disclosure focuses more precisely on plenoptic cameras, which are gaining a lot of popularity in the field of computational photography. Such cameras have novel post-capture processing capabilities. For example, after the image acquisition, the point of view, the focus or the depth of field can be modified. Also, from the obtained sampling of the light-field, the scene depth can be estimated from a single snapshot of the camera.
As schematically illustrated in **Figure 1,** a plenoptic camera uses a microlens array 1 positioned in the image plane of the main lens 2 and in front of a photosensor 3 on which one micro-image per micro-lens is projected (also called "sub-image"). The photosensor 3 is positioned in the image plane of the micro-lens array 1. The micro-lens array 1 comprises a plurality of micro-lenses uniformly distributed according to a quincunx arrangement and has a microlens diameter such that the micro-images 5 projected onto the photosensor 3 have a diameter equal to an even number of pixels of the photosensor, for example 10 pixels as illustrated in **figure 2.**
In this configuration each micro-image 5 depicts a certain area of the captured scene and each pixel associated with that micro-image 5 depicts this certain area from the point of view of a certain sub-aperture location on the main lens exit pupil.
The raw image of the scene obtained as a result is the sum of all the micro-images 5 acquired from respective portions of the photosensor 3. This raw image contains the angular information of the light-field. In fact, the angular information is given by the relative position of pixels in the micro-images 5 with respect to the centre of these micro-images. Based on this raw image, the extraction of an image of the captured scene from a certain point of view, also called "de-multiplexing" in the following description, is performed by reorganizing the pixels of this raw image in such a way that all pixels capturing the scene with a certain angle of incidence are stored in a same pixel grid (also commonly called "view" in the scientist language). Each pixel grid gathers, in a predefined sequence, the pixels of the micro-images 5 having the same relative position with respect to their respective centre (i.e. the pixels which are associated with a same given angle of view), thereby forming a pixel mosaic. Each pixel grid therefore has as many pixels as micro-lenses comprised in the array 1 and generally there are as many pixel grids as pixels per micro-image 5.
**Figure 3** depicts an example of prior art pixel grid 6. The pixel grid 6 gathers all pixels of the photosensor 3 having the position $(x_1, y_1)$ in the micro-images 5. However, because of the microlens quincunx arrangement and microlens diameter (which is approximately equal to an even number of pixels), pixel grids so obtained have pixel mosaics whose the RGB colour pattern is not regular, which does not allow an optimal colour post-processing. Indeed, after demultiplexing, each pixel grid is subjected to a colour process, also called "demosaicing", to produce the desired image associated with a given angle of view of the captured scene. Compared to the conventional approach consisting first at demosaicing the raw data of the captured scene before being demultiplexed, this approach consisting at demultiplexing raw data before being de-mosaicing avoids mixing information from different point of views and allows a better disparity estimation step. Nevertheless such an approach requires pixel mosaics having regular colour pattern, i.e. with rows and columns having alternating colours from a pixel to another, without which poor quality disparity estimation is carried out.

## 3. SUMMARY OF THE INVENTION

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A first aspect of the invention relates to a light field imaging device comprising a micro-lens array placed between a main lens and a photo-sensor, said micro-lens array comprising a plurality of micro-lenses arranged in an image plane of the main lens, each micro-lens being configured to project a micro-image onto the photo-sensor, the photo-sensor comprising a ordered array of pixels having a predetermined colour pattern and distributed in an image plane of the micro-lens array, The plurality of micro-lenses according to the invention is such that it is arranged such that centres of the micro-images projected onto the photosensor by adjacent micro-lenses are separated by an inter-micro-image distance corresponding to an odd number of pixels.

By using this arrangement of micro-lenses, the pixel mosaics obtained after de-multiplexing have each a regular colour pattern, based on the same colour logic as that of the predetermined colour pattern of the photosensor. Thus, contrary to the prior art, the colour demoisaicing process can be based on enhanced colour contents, favouring the mixing of primary colours RGB, and thereby allowing an efficient colour treatment of the demultiplexed raw data.

According to an embodiment, centres of the micro-lenses of each pair adjacent microlenses are separated from an inter-micro-lens distance equal to said inter-micro-image distance.

According to an embodiment, each micro-lens has a diameter corresponding to ten pixels and the distance between the centres of micro-images projected by said pair corresponds to eleven pixels.

This arrangement of micro-lenses enables to maintain a compact array of micro-lenses.

According to an embodiment, each micro-lens has a diameter corresponding to fourteen pixels and the distance between the centres of micro-images projected by said pair corresponds to fifteen pixels.

This arrangement of micro-lenses enables a compact array of micro-lenses to be maintained.

According to an embodiment, the ordered array of pixels is disposed in a first orthogonal arrangement defining a first plane with a first pair of orthogonal axes and the array of micro-lenses is disposed in a second orthogonal arrangement defining a second plane with a second pair of orthogonal axes, the first pair of orthogonal axes being parallel to the second pair of orthogonal axes.

A further aspect of the invention provides a micro-lens array for a light field camera device, the micro-lens array comprising a plurality of micro-lenses arranged in an image plane of a main lens of the light field camera device, each micro-lens being configured to project a micro-image onto a photo-sensor of the light field camera device, the photo-sensor comprising a ordered array of pixels having a predetermined colour pattern and distributed in an image plane of the micro-lens array, **wherein** the plurality of micro-lenses is arranged such that centres of the micro-images projected onto the photosensor by adjacent micro-lenses are separated by an inter-micro-image distance ($l_\mu$) corresponding to an odd number of pixels.

## 4. LIST OF FIGURES

Other features and advantages of embodiments of the invention shall appear from the following description, given by way of an indicative and non-exhaustive examples and from the appended drawings, in which:

- **Figure 1,** previously described with reference to the prior art, presents an example of structure of a conventional plenoptic imaging device;
- **Figure 2,** previously described with reference to the prior art, depicts an example of a distribution of micro-images on the photosensor of a conventional plenoptic imaging device;
- **Figure 3,** previously described with reference to the prior art, depicts an example of a pixel mosaic obtained after de-multiplexing, from a conventional plenoptic imaging device;
- **Figure 4** depicts an example of a micro-lens array according to a particular embodiment of the invention;

- **Figure 5** depicts an example of a projection of micro-images on a part of the photosensor of a plenoptic imaging device using the micro-lens array of figure 4; and
- **Figure 6** depicts an example of a pixel mosaic obtained after de-multiplexing from a plenoptic imaging device using the micro-lens array of figure 4.

## 5. DETAILED DESCRIPTION

In all of the figures of the present document, identical elements are designated by the same numerical reference sign.

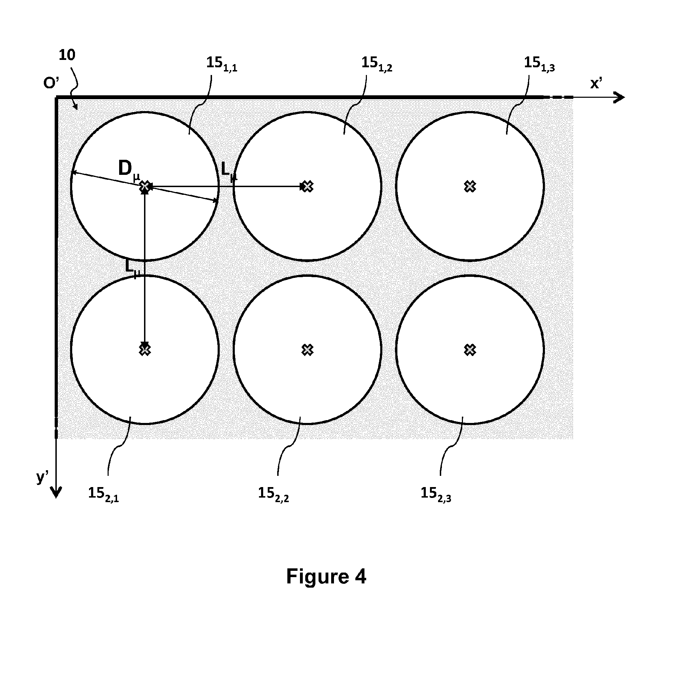

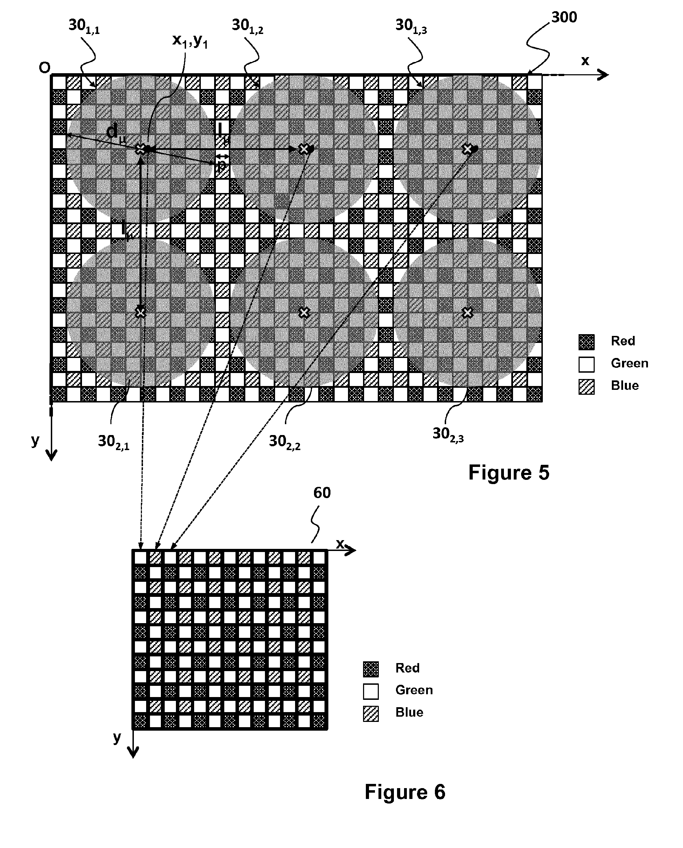

**Figure 4** depicts a simplified example of a micro-lens array 10 according to a particular embodiment of the invention. Only one part of the micro-lens array is shown in figure 4 for better readability of that figure and subsequent figures 5, 6.

The micro-lens array 10 is placed in the image plane of the main lens 2 and in front of the photosensor 3 on which one micro-image per micro-lens is projected.

The main lens 2 can be formed by one or more optical lenses.

The photosensor 3 uses for example a CCD (Charge-Coupled Device) or CMOS (Complementary Metal Oxide Semiconductor) technology. The photosensor 3 consists of an ordered array 300 of RGB pixels, with W pixels in width and H pixels in height, placed in the micro-lens array image plane. The photosensor 3 has for example 6000 pixels in width and 4000 pixels in height, each pixel having a predefined size of 4 x 4 $\mu$m. The RGB pixel array 300 is defined in a O,x,y plane in an orthogonal arrangement, rows being parallel to Ox axis and columns being parallel to Oy axis. The RGB pixels array 300 has a Bayer-type color pattern, namely: 50% Green pixels, 25% Red pixels and 25% Blue pixels based on an alternation of Green/Red and Blue/Green rows, a Green/Red row being itself composed of an alternation of Green and Red pixels and a Blue/Green row being itself composed of an alternation of Blue and Red pixels, as illustrated on figure 5. This colour pattern based on a regular arrangement of each pixel from each other is hereafter called "regular pattern" within the meaning of the present invention.

The micro-lens array 10 comprises a plurality of micro-lenses uniformly distributed in the image plane of the main lens 2. That is, the pitch p between two adjacent micro-lenses remains identical throughout the micro-lens array 10. The micro-lens array 10 is disposed in orthogonal arrangement comprising M rows and N columns. The micro-lens array 10 comprises for example 600 x 400 micro-lenses. Each micro-lens is structurally identical and configured to project a micro-image onto a dedicated area of the photo-sensor 3. As illustrated on figures 4 and 5, the micro-lenses $15_{1,1}$, $15_{1,2}$, $15_{1,3}$, $15_{2,1}$, $15_{2,2}$, $15_{2,3}$ respectively projects the micro-images $30_{1,1}$, $30_{1,2}$, $30_{1,3}$, $30_{2,1}$, $30_{2,2}$, $30_{2,3}$ onto the photosensor 3, each illuminating a certain number of pixels of the photosensor 3. The micro-lens array 10 is defined in a O',x',y' plane in an orthogonal arrangement, rows being parallel to O'x' axis and columns being parallel to O'y' axis. The micro-lens array 10 is oriented with respect to the pixel array 300 so that Ox and O'x' axes and Oy and O'y' are pairwise parallel.

The number of micro-lenses illustrated here is just a non-limitative example for the purposes of pedagogical description. Of course, a smaller or greater number of micro-lenses can be used without departing from the scope of the invention.

It is considered in the following description that the micro-images projected onto the photosensor 3 are a perfect projection of micro-lenses on the photosensor plane.

Indeed, considering $F_\mu$ the distance between the photosensor 3 and the micro-lens array 10 (micro-lens focal distance), F the distance between the main lens 2 and the micro-lens array 10 (main lens focal distance assuming the main lens focuses at infinity) and $L_\mu$ the inter-micro-lens distance, we can set the following expression using Pythagorean theorem:

$$\frac{F}{F + F_\mu} = \frac{L_\mu}{l_\mu}$$

As the micro-lens focal distance $F_\mu$ is small in comparison with the main lens focal distance F, we can consider that $\frac{F}{F+F_\mu} = \frac{L_\mu}{l_\mu} \approx 1$ and so $L_\mu \approx l_\mu$.

Therefore, it can be assumed that the micro-lens diameter $D_\mu$ is equal to the micro-image diameter $d_\mu$ and the distance $L_\mu$ separating the centres of two adjacent micro-lens (hereafter called 'inter-micro-lens distance') is equal to the distance $l_\mu$ separating the centres of two corresponding adjacent micro-images (hereafter called 'inter-micro-image distance'). Crosses in figures 4 and 5 represent the micro-lenses centre and micro-images centre respectively.

The microlens array 10 according to embodiments of the invention is arranged such that the centre of each micro-lens (micro-lens $15_{1,1}$ for example) is separated from the centre of its adjacent micro-lenses (micro-lenses $15_{1,2}$ and $15_{2,1}$ for example) by an inter-micro-lens distance $L_\mu$ equal to an odd number of pixels. An "adjacent micro-lens" refers to a micro-lens placed in the immediate vicinity of the considered micro-lens in the direction of O'x' axis or O'y' axis.

Taking the example of micro-lens $15_{1,1}$ in relation with figures 4 and 5. The micro-lens diameter $D_\mu$ is equal 10 pixels and the centre of this micro-lens $15_{1,1}$ (micro-images $30_{1,1}$) is separated of the centre of adjacent micro-lenses $15_{2,1}$ and $15_{1,2}$ (micro-images $30_{2,1}$ and $30_{1,2}$) by an inter-micro-lens distance $L_\mu$ equal to 11 pixels. In other words, in that configuration, the pitch between two adjacent micro-lenses (or micro-images) is equal to the length of one pixel. This specific structural configuration is advantageous in that it allows a dense micro-lens array to be maintained despite the addition of a pitch between two adjacent micro-lenses, in comparison with the prior art configuration discussed above. Of course an inter-micro-lens distance equal to a greater or smaller odd number of pixels and/or a greater or smaller micro-lens diameter can be used (while ensuring that the micro-images do not overlap in the sensor plane) without departing from the scope of the invention. For example, a micro-lens diameter $D_\mu$ equal to 14 pixels is commonly used for plenoptic cameras. In that case, an inter-micro-lens distance $L_\mu$ equal to 15 pixels can therefore be used.

**Figure 6** depicts an example of a pixel mosaic 60 obtained after demultiplexing, using the micro-lens array 10 of figure 4. This is obtained by gathering in a storing grid, according to a specific sequence, all the pixels of same position $(x_1, y_1)$ in the micro-images, i.e. all the pixels which are associated with a given point of view of the captured scene. The same principle is applied in parallel the others points of view of the captured scene. Generally there are as many pixel grids as pixels per micro-image (i.e. 100 pixel grids for the present example) and there are as many pixels as micro-lenses used (i.e. 600 x 400 pixels for the present example).

Taking the example of pixels of position $(x_1, y_1)$ associated with the micro-images $30_{1,1}$, $30_{1,2}$, $30_{1,3}$, $30_{2,1}$, $30_{2,2}$ and $30_{2,3}$:

- the Green pixel of micro-images $30_{1,1}$ is placed in first in the first raw of the grid,
- the Blue pixel of micro-images $30_{1,2}$ is placed in second in the first raw of the grid,
- the Green pixel of micro-images $30_{1,3}$ is placed in third in the first raw of the grid,
- the Red pixel of micro-images $30_{2,1}$ is placed in first in the second raw of the grid,
- the Green pixel of micro-images $30_{2,2}$ is placed in second in the second raw of the grid,
- the Red pixel of micro-images $30_{2,3}$ is placed in third in the second raw of the grid,

etc.

This particular arrangement of the micro-lenses allows a mosaic of RGB pixels to be formed for which the colour pattern is regular, in the same manner as the conventional Bayer-type colour pattern of the photosensor 3, in order to enhance the RGB colour content of the de-multiplexed views. Indeed, the mosaic of RGB pixels obtained by virtue of embodiments of the invention is composed as follow: 50% Green pixels, 25% Red pixels and 25% Blue pixels based on an alternation of Green/Red and Blue/Green rows, a Green/Red row being composed of an alternation of Green and Red pixels and a Blue/Green row being composed of an alternation of Blue and Red pixels, as illustrated in figure 6.

Such pixel mosaics enhance the mixing of RGB pixels, thereby allowing a colour demosaicing from the de-multiplexed raw content much more efficient than the prior art techniques.

Although the present disclosure has been described with reference to one or more examples, workers skilled in the art will recognize that changes may be made in form and detail without departing from the scope of the disclosure and/or the appended claims.

**Claims**

1.   Plenoptic imaging device comprising a micro-lens array (10) placed between a main lens (2) and a photo-sensor (3), said micro-lens array comprising a plurality of micro-lenses ($15_{1,1}$, $15_{1,2}$, $15_{1,3}$, $15_{2,1}$, $15_{2,2}$, $15_{2,3}$) arranged in an image plane of the main lens, each micro-lens being configured to project a micro-image onto the photo-sensor, the photo-sensor comprising a ordered array of pixels having a predetermined colour pattern and distributed in an image plane of the micro-lens array, **wherein** the plurality of micro-lenses is arranged such that centres of the micro-images projected onto the photosensor by adjacent micro-lenses are separated by an inter-micro-image distance ($l_\mu$) equal to an odd number of pixels.

2.   Plenoptic imaging device according to claim 1, wherein centres of the micro-lenses of each pair adjacent microlenses are separated from an inter-micro-lens distance ($L_\mu$) corresponding to said inter-micro-image distance.

3.   Plenoptic imaging device according to claim 2, wherein each micro-lens has a diameter corresponding to ten pixels and the distance between the centres of micro-images projected by said pair corresponds to eleven pixels.

4.   Plenoptic imaging device according to claim 2, wherein each micro-lens has a diameter corresponding to fourteen pixels and the distance between the centres of micro-images projected by said pair corresponds to fifteen pixels.

5.   Plenoptic imaging device according to any one of claims 1 to 4, wherein the ordered array of pixels is disposed in a first orthogonal arrangement defining a first plane with a first pair of orthogonal axes and the array of micro-lenses is disposed in a second orthogonal arrangement defining a second plane with a second pair of orthogonal axes, the first pair of orthogonal axes being parallel to the second pair of orthogonal axes.

Figure 1

O

5

$x_1, y_1$

3

x

Red
Green
Blue

y

**Figure 2**

6

Red
Green
Blue

**Figure 3**

**Figure 4**

Figure 5

Figure 6

Europäisches
Patentamt

European
Patent Office

Office européen
des brevets

# EUROPEAN SEARCH REPORT

Application Number

EP 15 30 5869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/154651 A1 (OHNO TAKENORI [JP]) 21 June 2012 (2012-06-21) * paragraphs [0009], [0044] - [0054]; figures 4, 5, 21 * ----- | 1-5 | INV. H04N13/02 H04N5/335 |
| X | US 2011/149125 A1 (MORIMOTO YASUHIRO [JP]) 23 June 2011 (2011-06-23) * paragraph [0058] - paragraph [0061]; figures 1, 5 * ----- | 1-5 | |
| X | US 2009/128658 A1 (HAYASAKA KENGO [JP] ET AL) 21 May 2009 (2009-05-21) * paragraph [0015]; figure 1 * * the whole document * ----- | 1-5 | |

TECHNICAL FIELDS
SEARCHED (IPC)

H04N

The present search report has been drawn up for all claims

| Place of search | Date of completion of the search | Examiner |
|---|---|---|
| Munich | 10 November 2015 | Prange, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5869

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2015

| Patent document cited in search report | Publication date | Patent family member(s) | | Publication date |
|---|---|---|---|---|
| US 2012154651 A1 | 21-06-2012 | CN | 102547095 A | 04-07-2012 |
| | | JP | 2012142918 A | 26-07-2012 |
| | | US | 2012154651 A1 | 21-06-2012 |
| | | US | 2014036130 A1 | 06-02-2014 |
| US 2011149125 A1 | 23-06-2011 | NONE | | |
| US 2009128658 A1 | 21-05-2009 | CN | 101437168 A | 20-05-2009 |
| | | JP | 4905326 B2 | 28-03-2012 |
| | | JP | 2009124213 A | 04-06-2009 |
| | | US | 2009128658 A1 | 21-05-2009 |

EPO FORM P0459

For more details about this annex : see Official Journal of the European Patent Office, No. 12/82

**EP 3 104 604 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130222633 A